# FASCICULE DE BREVET EUROPEEN

(11) **EP 3 830 774 B1**
(45) Date de publication et mention de la délivrance du brevet: **03.12.2025**
(21) Numéro de dépôt: 19746123.9
(22) Date de dépôt: 21.06.2019
(51) Int. Cl.: G06Q 10/087, G06Q 50/04

(54) **GESTION AUTOMATISÉE DE FLUX DANS UN ATELIER DE MÉLANGEAGE**
AUTOMATISIERTES FLUSSMANAGEMENT IN EINER COMPOUNDIERSTATION
AUTOMATED FLOW MANAGEMENT IN A COMPOUNDING STATION

(30) Priorité: 31.07.2018 FR 1857125
(43) Date de publication de la demande: 09.06.2021
(73) Titulaire: COMPAGNIE GENERALE DES ETABLISSEMENTS MICHELIN, 63000 Clermont-Ferrand (FR)
(72) Inventeur: ASTIER, Cédric, 63040 Clermont-Ferrand Cedex 9 (FR)
(74) Mandataire: M.F.P. Michelin
(86) Numéro de dépôt international: PCT/FR2019/051517
(87) Numéro de publication internationale: WO 2020/025868

(56) Documents cités:
- US-B1- 6 313 212
- LISA EITEL: "AS/RS design to run new manufacturing and distribution center by 2019", 12 June 2017 (2017-06-12), online, pages 1 - 5, XP055573386, Retrieved from the Internet <URL:https://www.linearmotiontips.com/asrs-design-run-new-manufacturing-distribution-center-2019/> [retrieved on 20190322]
- ANONYMOUS: "Tire Industry Automation: Now a Necessity", ROBOTIC MAGAZINE, 26 April 2017 (2017-04-26), pages 1 - 3, XP055522593, Retrieved from the Internet <URL:https://www.dimetix-usa.com/tire-industry-automation-necessity/> [retrieved on 20181109]
- MAZUREK ET AL: "Usine Michelin Montceau ... inauguration de son nouvel outil : la PA BU !", MONTCEAU-NEWS.COM, 24 March 2016 (2016-03-24), pages 2-10;20-21;31-32;35;37;38;40;45-46, XP055503159, Retrieved from the Internet <URL:http://montceau-news.com/saone_et_loire/304844-usine-michelin-montceau.html> [retrieved on 20180829]
- SHI HONG-YUAN ET AL: "Travel time analysis of the single and dual command of AS/RS", 2017 29TH CHINESE CONTROL AND DECISION CONFERENCE (CCDC), IEEE, 28 May 2017 (2017-05-28), pages 3407 - 3413, XP033121164, DOI: 10.1109/CCDC.2017.7979095
- ANONYMOUS: "INNOVATIONS FOR INTRALOGISTICS MANUFACTURER OF MATERIAL HANDLING EQUIPMENT", 13 June 2018 (2018-06-13), XP055559183, Retrieved from the Internet <URL:http://europasystems.com/data/include/cms/Katalog-2018/General_catalog_EN_2pager.pdf> [retrieved on 20190220]

## Description

### DOMAINE TECHNIQUE

L'invention concerne de manière générale la production de mélanges de caoutchouc et des pneumatiques de véhicule préparés à partir de ceux-ci. Plus particulièrement, l'invention concerne la gestion de flux automatisé y compris la gestion de matières premières et des produits semi-finis (ou « semi-finis ») dans un atelier de mélangeage de caoutchouc. L'invention utilise un moyen de gestion automatisé pour faciliter le transport et la réception des matériaux qui sont identifiés dans la création d'une recette de mélange de caoutchouc choisie.

### CONTEXTE

Dans le domaine de fabrication de mélange de caoutchouc, une succession de machines telles que les mélangeurs internes et les mélangeurs externes sont utilisés pour le mélangeage de matières premières. Ces matières premières sont de différentes natures telles que caoutchouc naturel et/ou synthétique, charges renforçantes (comme le noir de carbone et la silice), des plastifiants liquides (par exemple, des huiles et des résines connues), des additifs (par exemple, 6PPD) et des agents de vulcanisation. Dans un atelier de mélangeage, il est connu qu'il existe une grande diversité de nature de ces matières premières pour réaliser les recettes nécessaires pour fabriquer les pneumatiques. Selon une recette choisie, il faut acheminer au bon moment, à la bonne machine, la bonne quantité en masse de ces matières premières. En conséquence, les flux générés dans l'atelier de mélangeage sont très complexes. Les risques d'erreur liés à cette complexité sont importants.

De plus, dans les ateliers actuels, la manipulation et le stockage des matières premières représentent une part importante de la surface de l'atelier, de l'occupation des opérateurs et des moyens de manutention (par exemple, en utilisant un chariot élévateur, un ascenseur, un transpalette, etc.). Tout ceci engendre des coûts d'investissements et d'exploitations importants. La manipulation des charges renforçantes (comme des noirs de carbone ou des silices) est également un point particulier du à la volatilité du matériau.

Dans un atelier de mélangeage connu, le procédé de mélangeage utilise la gravité. Les produits stockés et gérés dans leurs ateliers de préparation dédiés (y compris le dosage, le pesage et la préparation) sont re-stockés (dans des containers ou dans des convoyeurs de transport et/ou stockages) jusqu'à l'entrée du mélangeur. Le coût des containers et/ou des convoyeurs, et leur intégration, est une partie importante du procédé et nécessite également beaucoup de surface. Dans le cas des produits re-stockés, cela nécessite encore des surfaces de stockage. Afin d'alimenter le mélangeur, les produits doivent être amenés dans les étages supérieurs par convoyeur ou ascenseur. La gestion des flux des matériaux doit également être suivie avec précision afin de garantir le procédé. Toutes ces manipulations manuelles peuvent entrainer des erreurs dans la gestion de flux. Avec la manipulation des produits, le flux entre les produits primaires et le produit final n'est pas optimisé.

Dans un atelier de stockage connu, utilisé en combinaison avec des ateliers de mélangeage connus, les produits d'une recette de mélange de caoutchouc choisie sont stockés au sol dans une surface donnée. Le résultat est une mauvaise gestion de la surface. Par exemple, afin d'avoir accès aux produits, un pourcentage de l'atelier de stockage est dédié aux allées des chariots élévateurs. Ce pourcentage d'allée peut représenter un part important. Sur la surface de stockage restante, les produits sont typiquement stockés par lots. Un lot, équivalent en général à un camion (18 à 24 produits), est disposé dans une ou plusieurs travées qui représentent un multiple du lot. Tant que le dernier produit n'a pas été retiré et utilisé, on ne peut pas re-remplir cette travée avec un nouveau lot. Cette gestion de lot entraine un taux de remplissage de travée qui peut atteindre jusqu'à 60%.

Afin d'optimiser les stockages au sol, on peut utiliser des étagères métalliques ou des produits empilables. Cela permet d'utiliser le volume perdu de l'atelier de stockage. Toutefois, pour accéder aux produits empilables, il est nécessaire de déplacer plusieurs produits (par exemple, s'il y a besoin de prendre le produit du bas ou du milieu). Pour les stockages en crémaillères, le coût des étagères est élevé car elles doivent pouvoir résister aux chocs engendrés par des chariots élévateurs et d'autres dispositifs de stockage connus. En outre, les règles de sécurité imposent également des limites de hauteur de stockages. Ces solutions présentent donc une optimisation du stockage mais ne résolvent pas la situation problématique de manutention entre des ateliers et des étages d'une installation de mélangeage.

En cherchant des solutions pour stocker, pour récupérer et pour expédier les matières premières et semi-finis dans un atelier de mélangeage, les systèmes de stockage automatisés (par exemple, des systèmes « automatic storage and retrieval system » ou « ASRS » et leurs équivalents) sont disponibles qui sont fréquemment utilisés dans des entrepôts et des ateliers de production.
Les documents « AS/RS design to run new manufacturing and distribution center by 2019" de Lisa Eitel et « Tire Industry Automation : Now a Necessity » publié dans Robotic Magazine divulguent l'utilisation d'un ASRS pour optimiser l'espace de stockage dans une usine. Mais l'ASRS n'est pas intégré dans les flux d'usine et ne permet pas d'optimiser les distances parcourues par les matériaux stockés. Pour gérer le plus efficacement le flux de matières premières, l'invention concerne la mise en place d'un système de stockage automatisé afin d'optimiser l'espace disponible dans un atelier de mélangeage de caoutchouc tout en améliorant l'efficacité du processus de mélange de caoutchouc associé. Avec plusieurs niveaux de produits similaires disposés à la fois verticalement et horizontalement par rapport aux dispositions verticales et horizontales des niveaux respectifs d'un atelier de mélangeage, la capacité de stockage globale peut être augmentée. Le flux des matières premières et de semi-finis est donc simplifié.

### RÉSUMÉ

L'invention concerne un système de gestion de flux automatisé qui gère un flux de matières premières et un flux de produits semi-finis pour réaliser un ou plusieurs processus de mélangeage de caoutchouc, le système comprenant :
- une installation de mélangeage de caoutchouc avec un atelier de mélangeage de caoutchouc où des processus de mélangeage sont réalisés en fonction d'une recette de mélange de caoutchouc choisie, l'atelier de mélangeage de caoutchouc comprenant plusieurs niveaux de production qui nécessitent la fourniture des matières premières pour réaliser les processus de mélangeage correspondants à chaque niveau de production;
- des moyens de stockage automatisés ayant plusieurs niveaux de stockage et un ou plusieurs niveaux de stockage liés avec chaque niveau de production de l'atelier de mélange de caoutchouc, les moyens de stockage automatisés du système de gestion comprenant :
   - au moins un système de stockage de matières premières avec plusieurs niveaux de stockage qui facilitent le stockage, le transfert et la récupération des matières premières en fonction des processus réalisés aux niveaux de production de l'atelier de mélange de caoutchouc, et avec lequel le système de gestion génère un ou plusieurs flux de matières premières;
   - un système de stockage de produits semi-finis avec plusieurs niveaux de stockage auxquels les produits semi-finis en provenance de l'atelier de mélange de caoutchouc sont stockés, les produits semi-finis peuvent être attribués à des places en fonction des processus réalisés aux niveaux de production correspondants à l'atelier de mélange de caoutchouc, et avec lequel le système de gestion génère un ou plusieurs flux de produits semi-finis ; et
   - une ou plusieurs palettes esclaves incorporées en permanence dans chaque moyen de stockage automatisé qui comprennent des zones virtuelles de stockage afin de faciliter la gestion du stock et des flux des matières premières et des produits semi-finis.

Dans certains modes de réalisation, l'installation de mélangeage comprend plusieurs secteurs dans lesquels des processus de mélangeage sont réalisés, et chaque secteur est dédié à un processus distinct avec lequel le système de gestion est lié, les secteurs comprenant :
- un secteur avec une zone de liaison où les matières premières qui arrivent à l'installation de mélangeage sont introduites ;
- un secteur avec une zone de stockage des matières premières ;
- un secteur auquel l'atelier de mélangeage de caoutchouc est disposé avec au moins une zone de traitement où les palettes esclaves sont récupérées du système de stockage de matières premières ;
- un secteur avec une zone de stockage des produits semi-finis ; et
- un secteur avec une zone de transfert où les produits semi-finis sortent de l'installation de mélangeage.

Dans certains modes de réalisation, le système de gestion comprend en outre, à la zone de liaison :
- au moins un distributeur des palettes esclave où les palettes esclaves du système de stockage de matières premières sont empilées ;
- un point d'entrée disposée à côté du distributeur pour qu'une palette esclave au distributeur soit chargée avec une ou plusieurs matières premières entrantes au point d'entrée ;
- un appareil de contrôle qui contrôle la forme des matières premières transférées ;
- une sortie où les matières premières non-conformes sortent du système de gestion ;
- une table tournante qui réalise une manipulation d'une matière première pour qu'une identification unique de matière première soit reconnue ;
- un rail d'accès de la zone de liaison qui est en alignement avec le système de stockage de matières premières ; et
- un véhicule autonome qui porte les matières premières conformes aux espaces dédiés au système de stockage automatisé en fonction des données intégrées avec chaque identification unique.

Dans certains modes de réalisation, le système de gestion comprend en outre, à la zone de traitement :
- une sortie où les matières premières commandées sortent du système de stockage de matières premières après leur récupération, et les matières premières récupérées sont transférées au niveau de production correspondant de l'atelier mélangeage de caoutchouc ;
- une station d'empilage où les palettes esclaves sont récupérées et empilées ;
- une station de nettoyage facultative où les palettes esclaves sont nettoyées ;
- une entrée est installée pour accepter des palettes dédiées vides en provenance d'un niveau de production correspondant de l'atelier de mélangeage de caoutchouc ; et
- un appareil de contrôle qui assure la conformité des palettes dédiées aux espaces dédiés au système de stockage automatisé.

Dans certains modes de réalisation, le système de gestion comprend en outre au moins un robot pour placer sélectivement et pour retirer sélectivement les matières premières dans le stockage de matières premières et les produits semi-finis dans le système de stockage de produits semi-finis.

Dans certains modes de réalisation, le système de gestion comprend en outre au moins un des éléments suivants :
- des lignes de transfert sur lesquelles des convoyeurs correspondants se déplacent par rapport au système de stockage de matières premières et au système de stockage de produits semi-finis ; et
- un système de contrôle qui identifie les matières premières et les gère en fonction d'un flux optimisé pour créer la recette de mélange de caoutchouc choisie.

Dans certains modes de réalisation, les palettes esclaves du système de stockage de matières premières sont chargées avec une ou plusieurs matières premières en fonction de la recette de mélange de caoutchouc choisie ; et les palettes esclaves du système de stockage de produits semi-finis sont chargées avec une ou plusieurs produits semi-finis commandés en fonction de la recette de mélange de caoutchouc choisie
Dans certains modes de réalisation, les matières premières comprennent au moins une matière première choisie parmi un ou plusieurs noirs de carbone, une ou plusieurs gommes, une ou plusieurs silices, un ou plusieurs produits chimiques et un ou plusieurs soufres ; et les produits semi-finis comprennent au moins une matière choisie parmi un ou plusieurs masterbatchs, une ou plusieurs matières semi-finies et une ou plusieurs matières à recycler.

L'invention concerne aussi un procédé automatisé de gestion de flux réalisé par le système de gestion divulgué dans une installation de mélangeage qui réalise la fabrication des mélanges de caoutchouc. Le procédé comprend les étapes suivantes :
- l'étape d'identification d'une catégorie pour chacune d'une pluralité de matières premières à utiliser dans l'installation de mélangeage, dans laquelle la catégorie identifiée est déterminée parmi une pluralité de catégories différentes en fonction des propriétés d'une recette de mélange de caoutchouc choisie ;
- l'étape d'identification d'une destination dans le système de gestion vers laquelle les matières premières doivent être transportées pour chaque catégorie identifiée; et
- l'étape de génération d'un ou de plusieurs flux de matières premières entre le système de stockage de matières premières et l'atelier de mélange de caoutchouc, cette étape comprenant l'étape de transportation des matières premières vers la destination identifiée.

Dans un mode de réalisation du procédé, le procédé comprend en outre les étapes suivantes :
- l'étape de génération d'un ou des plusieurs flux de produits semi-finis entre l'atelier de mélange de caoutchouc et le système de stockage de produits semi-finis ; et
- l'étape de classification des flux de matières premières générés et des flux de produits semi-finis générés par moyens d'auto-apprentissage.

D'autres aspects de l'invention vont devenir évidents grâce à la description détaillée suivante.

### BRÈVE DESCRIPTION DES DESSINS

La nature et les divers avantages de l'invention vont devenir plus évidents à la lecture de la description détaillée qui suit, conjointement avec les dessins annexés, sur lesquels les mêmes numéros de référence désignent partout des parties identiques, et dans lesquels :
Les figures 1 et 2 représentent des vues schématiques d'un mode de réalisation d'un système de gestion de flux automatisé de l'invention.
La figure 3 représente une vue partielle d'un système de stockage de matières premières du système de gestion des figures 1 et 2.
La figure 4 représente un mode de réalisation d'une palette esclave du système de gestion représenté, la palette esclave étant chargée avec des matières premières.
La figure 5 représente une vue partielle d'un dispositif d'empilage employé dans le système de stockage de matières premières de la figure 4, et dans le système de stockage de produits semi-finis de la figure 8.
La figure 6 représente une vue schématique au-dessus d'une zone de liaison où les matières premières arrivent à l'installation de mélangeage des figures 1 et 2.
La figure 7 représente une vue schématique en perspective d'une zone de traitement du système de gestion représenté.
La figure 8 représente une vue partielle d'un système de stockage de produits semi-finis du système de gestion représenté.
Les figures 9, 10, 11 représentent un exemple de gestion de flux automatisé réalisé par le système de gestion de l'invention selon un généré.

### DESCRIPTION DÉTAILLÉE

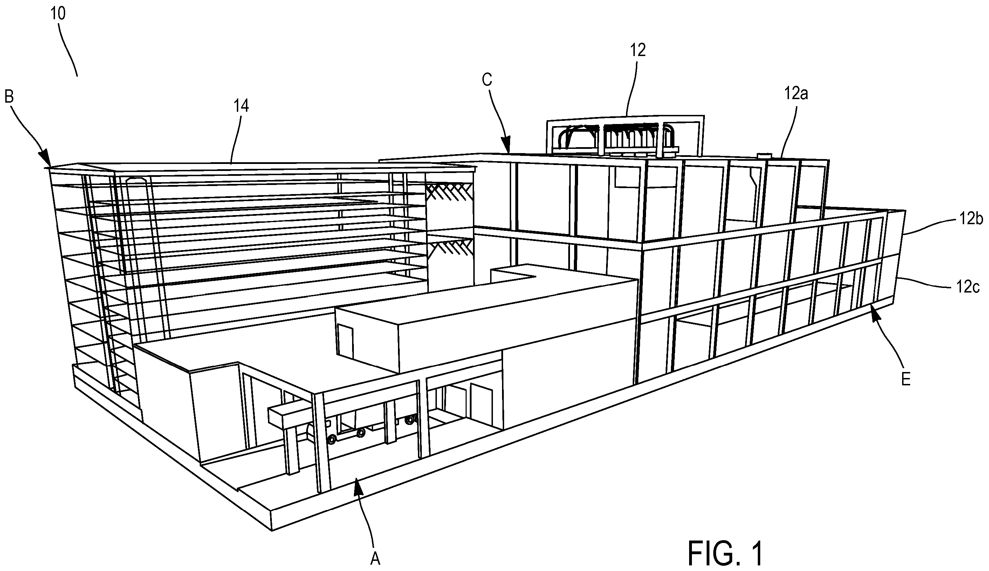

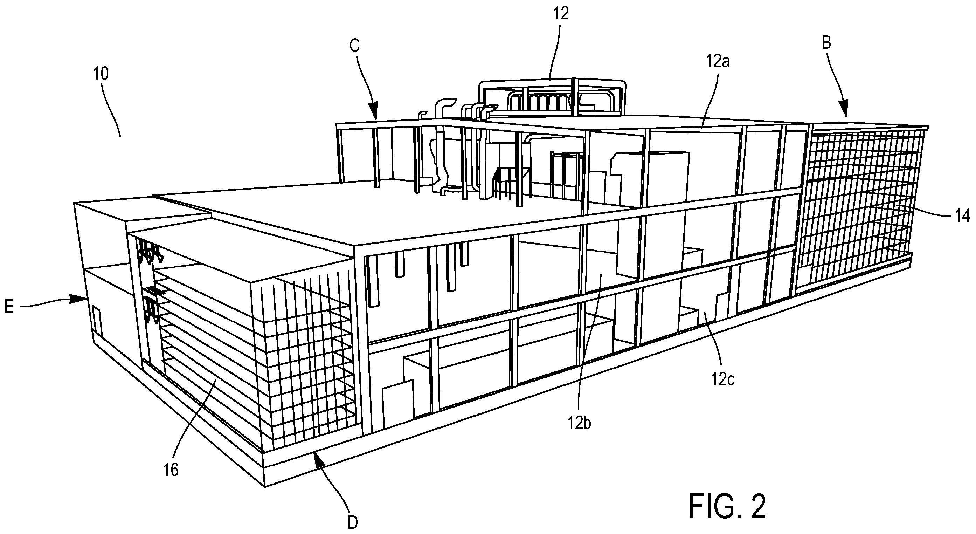

En se référant maintenant aux figures, sur lesquelles les mêmes numéros identifient des éléments identiques, les figures 1 et 2 représentent un mode de réalisation d'un système de gestion de flux automatisé (ou « système de gestion »). Dans l'invention, le terme « flux » veut dire un déplacement de matières premières et produits semi-finis identifiés entre des niveaux de production identifiés comme disponibles pour les recevoir. Par "disponible", on entend le niveau ou les niveaux de production qui ne sont pas actuellement en activité mais qui attendent l'arrivée des matières premières et des produits semi-finis et qui commencent leurs processus à l'arrivée des matières premières identifiées. Le terme « flux » fait aussi référence à un temps déterminé pour réaliser le déplacement des matières premières d'une recette de mélange de caoutchouc choisie. Les unités de temps utilisés peuvent être des secondes, des minutes, des heures, des jours, des semaines et des mois. Les unités de temps utilisés peuvent être des équivalents de ceux-ci, par exemple, un temps restant jusqu'à ce que le système puisse réaliser le meilleur flux de matières premières dans le système.

Le système de gestion divulgué gère la disponibilité opérationnelle des matières premières et produits semi-finis et l'exécution de processus à plusieurs niveaux d'un atelier de mélangeage de caoutchouc (ou « installation de mélangeage »). L'atelier de mélangeage se trouve dans une installation de mélangeage qui réalise la fabrication des mélanges de caoutchouc (par exemple, pour produire un ou plusieurs produits à base de caoutchouc, tels que des pneumatiques ou des parties de pneumatiques). Le système de gestion comporte des unités de stockage des matières premières et des produits semi-finis et des unités de transfert et de distribution autonomes pour déplacer les matières premières et les produits semi-finis dans l'installation de mélangeage.

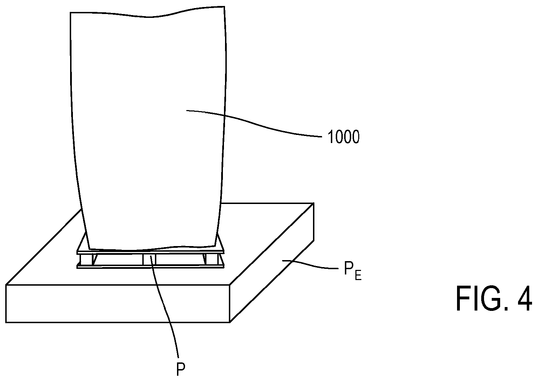

A titre d'exemple, une installation de mélangeage 10 est représentée dans les figures 1 et 2 qui inclut plusieurs secteurs dans lesquels des processus de mélangeage sont réalisés. Chaque secteur est dédié à un processus distinct avec lequel le système de gestion est lié. Le secteur A comprend une zone de liaison où les matières premières qui arrivent à l'installation de mélangeage (par exemple, par camion) sont introduites (voir la figure 1). Le secteur B comprend une zone de stockage des matières premières qui incluent, sans limitation, le noir de carbone, les gommes (par exemple, les gommes naturelles, les gommes synthétiques, les gommes plastifiées), la silice, les produits chimiques et le soufre (voir les figures 1 et 2). Les produits matières peuvent être stockées dans des sacs ou dans d'autres contenants comme représentés et décrit en dessous en référence à la figure 4. Le secteur C comprend un atelier de mélangeage de caoutchouc (ou « atelier ») 12 où des processus de mélangeage sont réalisés en fonction d'une recette de mélange de caoutchouc choisie (voir les figures 1 et 2). Le secteur D comprend une zone de stockage des produits semi-finis qui comprennent, sans limitation, au moins une matière choisie parmi un ou plusieurs masterbatchs, une ou plusieurs matières semi-finies et une ou plusieurs matières à recycler (voir la figure 2). Le secteur E comprend une zone de transfert où les produits semi-finis sortent de l'installation de mélangeage 10 (par exemple, par chariot-élévateur)(voir les figures 1 et 2).

Chaque niveau de l'atelier de mélangeage 12 nécessite la fourniture de plusieurs matières premières spécifiques pour effectuer un ou plusieurs processus de mélangeage correspondants à chaque niveau. Le système de gestion permet l'identification des matières premières selon au moins une recette de mélangeage de caoutchouc choisie. Le système de gestion permet aussi la gestion et l'utilisation des matières premières identifiées au niveau correspondant où un processus de mélangeage est réalisé pendant un cycle de fabrication de mélange de caoutchouc. Les matières premières qui vont satisfaire les processus aux niveaux correspondants sont identifiées. Compte tenu du temps alloué pour assembler les matières premières nécessaires à la réalisation de la recette de mélange choisie, le système de gestion peut identifier des matières premières disponibles en fonction du temps minimum imparti pour réaliser le meilleur flux de matières premières.

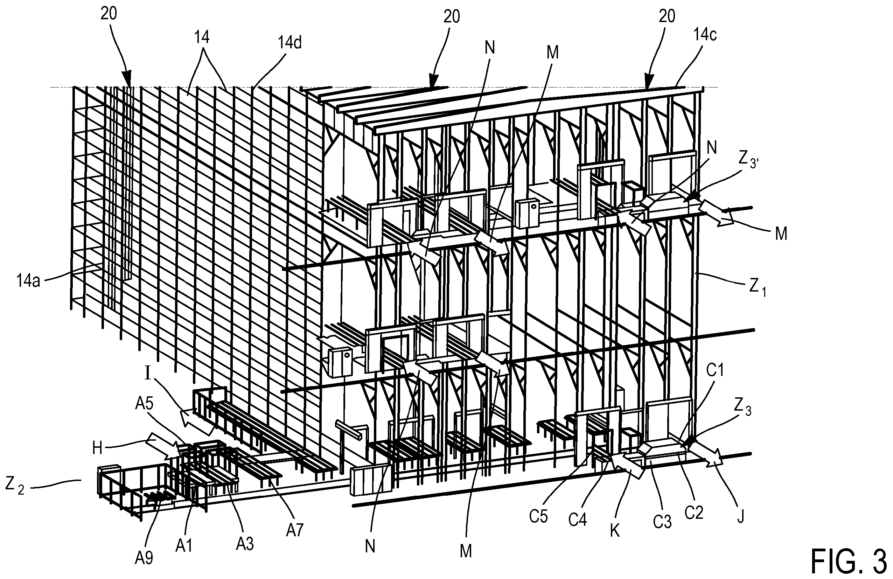

En se référant encore aux figures 1 et 2 et en outre à la figure 3, le système de gestion comporte des moyens de stockage automatisés ayant plusieurs niveaux de stockage. Chaque niveau de stockage est lié avec au moins un niveau de production de l'atelier de mélangeage 12 correspondant. La liaison est réalisée par un ou plusieurs convoyeurs du système de gestion qui sont décrits plus en détail ci-dessous. Les niveaux de stockage sont associés de manière opérationnelle à chaque niveau de production de l'atelier et entre eux-mêmes. Il est entendu que chaque niveau de stockage peut être associé de manière opérationnelle à un ou plusieurs niveaux de stockage d'au moins un autre moyen de stockage automatisé. Les systèmes de stockage automatisés comprennent des systèmes « automatic storage and retrieval system » (ou « ASRS ») et leurs équivalents.

Les moyens de stockage automatisés du système de gestion comprennent au moins un système de stockage de matières premières 14 du secteur B et au moins un système de stockage de produits semi-finis 16 du secteur D. Pour satisfaire une recette de mélangeage de caoutchouc choisie, le système de gestion génère un ou plusieurs flux de matières premières entre le système de stockage de matières premières 14 et l'atelier 12. Le système de gestion génère aussi un ou plusieurs flux de produits semi-finis entre l'atelier 12 et le système de stockage de produits semi-finis 14. Dans l'exemple représenté par les figures, le système de stockage de matières premières 14 utilise un premier système de stockage automatisé 14c et un deuxième système de stockage automatisé 14d. Il est bien entendu que chaque système de stockage peut utiliser un ou plusieurs systèmes de stockage automatisés.

Dans certains modes de réalisation, des flux potentiels peuvent être identifiés, par exemple, en satisfaisant les exigences actuelles du flux et en indiquant la réalisation de la recette de mélange choisie. Le système de gestion peut générer divers flux qui répondront aux besoins d'une ou plusieurs recettes connues. Dans certains modes de réalisation, les flux peuvent être classés en utilisant des approches d'auto-apprentissage dans lesquelles certains flux sont plus souhaitables que d'autres.

Dans le mode de réalisation représenté, l'atelier de mélangeage 12 comporte trois niveaux de production 12a, 12b, 12c où les processus de mélangeage sont réalisés en utilisant des matières premières identifiées. Le système de stockage de matières premières 12 comporte un ou plusieurs niveaux de stockage correspondants qui facilitent le stockage, le transfert et la récupération des matières premières en fonction des processus réalisés aux niveaux de production de l'atelier. Il est entendu que l'atelier de mélangeage 12 et le système de stockage de matières premières 14 peuvent être adaptés en fonction d'une recette choisie et d'une cible de production souhaitée. Il est aussi entendu que des niveaux multiples de stockage peuvent être dédiés à un seul niveau de production.

A chaque niveau de stockage du système de stockage de matières premières 14, les matières premières sont stockées en attendant leur transfert pendant un cycle de mélangeage de caoutchouc. Dans un mode de réalisation, les matières premières sont stockées en fonction des processus réalisés au niveau de production correspondant de l'atelier 12. En se référant en outre à la figure 4, ces matières premières peuvent être fournies à, et transportées dans, l'installation de mélangeage 10 dans des sacs 1000 (appelés également « bags » et « big bags »). Un seul sac ou plusieurs sacs peuvent être transportés entre des destinations identifiées dans et autour l'atelier de mélangeage 12, le système de stockage de matières premières 14 et le système de stockage de produits semi-finis 16. Les sacs 1000 servent de stockage mobile permettant d'identifier, de stocker et de transporter les matières premières. Il est entendu que d'autres contenants peuvent être utilisés. Dans l'invention, le terme « contenant » veut dire ce qui contient ou peut contenir une matière première identifiée, y compris, sans limitation, des sacs, des cartons, des boîtes et des caisses. Un « sac » ou un "contenant" peut également inclure un sac ou un contenant réutilisable.

Conformément aux besoins de la recette choisie, les matières premières sont stockées sur des palettes associées P (c.-à-d., pour tous les cycles de mélangeage de caoutchouc, les palettes qui sont dédiées aux matières premières identifiées). Une palette associée peut être chargée avec une ou plusieurs matières premières en fonction de la recette du mélange de caoutchouc choisie. Une palette associée peut donc être chargée d'un ou plusieurs sacs 1000.

En se référant encore à la figure 4, chaque sac 1000 peut être stocké et transporté, avec sa palette associée P, dans le système de gestion par moyen d'une palette esclave (ou « fausse palette ») P_{E} qui forme une partie du système de gestion. Les palettes esclaves P_{E} deviennent donc des zones virtuelles de stockage afin de faciliter la gestion du stock et des flux des matières premières utilisées dans le mélangeage d'un caoutchouc. Les palettes esclaves P_{E} ne sortent jamais du système de stockage de matières premières 14 afin de la garantir sa géométrie. Pour assurer le bon positionnement des matières premières, la palette esclave P_{E} peut comprendre un ou plusieurs indicateurs d'emplacement (non-représentés) qui couvrent au moins une partie de la surface de la palette. Les indicateurs d'emplacement peuvent être utilisés pour assurer un bon positionnement des matières premières sur la palette esclave. Dans quelques modes de réalisation, la palette esclave P_{E} peut comprendre d'un moyen de rétention (par exemple, une barrière ou d'autres moyens équivalents) pour assurer le bon positionnement des matières premières sur la palette esclave.

Dans ce mode de réalisation, chacune des matières premières est caractérisée par une identification unique (par exemple, en utilisant des chiffres, des codes, des identifications RFID, des liens hypertextes ou des moyens équivalents) par laquelle un contrôleur (par exemple, un PLC ou un système de contrôle équivalent) peut identifier les matières premières et peut déterminer des informations complémentaires (par exemple, pour mettre à jour l'heure d'arrivée et la durée de stockage d'une matière première au système de stockage de matières premières 14). Dans un mode de réalisation, grâce à un moyen d'identification intégré aux sacs et/ou aux palettes associées, les sacs et leurs contenus (c.-à-d., les matières premières ayant des propriétés connues) sont identifiés, connus et gérés. Le système de contrôle gère les flux des matières premières à travers le système de stockage de matières premières 14 de telle sorte que le meilleur flux est réalisé pour créer la recette du mélange de caoutchouc choisie.

Un système de contrôle peut être configuré pour ranger les matières premières dans le système de stockage des matières premières 14. Le système de contrôle peut identifier les palettes associées P et rangées pour que des palettes spécifiques (soit des palettes esclaves du système de gestion soit des palettes associées) puissent être trouvées et récupérées à tout moment. Des groupes de palettes associées peuvent être créés et peuvent être placées dans des emplacements dédiés du système de stockage de matières premières. L'identification d'une palette peut être réalisée par des moyens d'identification connus, soit manuellement (par exemple, en utilisant au moins un indice visuel, audio et/ou tactile) soit automatiquement (par exemple, en utilisant des chiffres, des codes, des identifications RFID, des liens hypertextes ou des moyens équivalents), pour harmoniser l'identification de la palette avec l'identification des matières premières chargées sur la palette. Ainsi, le système de gestion permet d'améliorer les prévisions du flux et l'espace requit pour des matières premières en stockage.

Au système de stockage de matières premières 14, des niveaux de stockage sont utilisés pour stocker et pour transférer des matières premières en attendant leur transfert pendant un cycle de mélangeage de caoutchouc. Dans le mode de réalisation représenté par la figure 3, les matières premières qui comprennent les « charges renforçantes » et les additifs en poudre (y compris les noirs de carbone, les silices et les produits chimiques) sont stockées dans le système de stockage de matières premières 14 de façon à minimiser leurs déplacements par rapport aux niveaux de production correspondants de l'atelier 12. A titre d'exemple, les noirs de carbone sont stockés dans les niveaux inférieurs à proximité des niveaux de production qui utilisent les noirs de carbone. Les produits chimiques sont stockés dans les niveaux supérieurs à proximité des niveaux de production qui utilisent les produits chimiques. Les silices, en tenant compte de leur qualité inerte, sont stockées dans les niveaux intermédiaires à proximité des niveaux de production qui utilisent les silices, les séparant ainsi des noirs carbones et des produits chimiques.

En se référant encore à la figure 3, le système de contrôle est programmé pour récupérer les matières premières requises du système de stockage de matières premières 14. Le système de contrôle est aussi programmé pour acheminer ces matières jusqu'au niveau de production correspondant de l'atelier 12. Le système de contrôle est programmé pour transférer les matières premières à travers une zone de transfert Z₁ et pour spécifier une fréquence à laquelle le transfert devrait avoir lieu. Dans un procédé de mélangeage de caoutchouc réalisé par le système de gestion, une étape de spécification de cette fréquence comprend la spécification de la fréquence à laquelle des palettes esclaves vides et des palettes esclaves chargées sont transférées entre des niveaux de production de l'atelier 12 et des niveaux correspondants du système de stockage de matières premières 14.

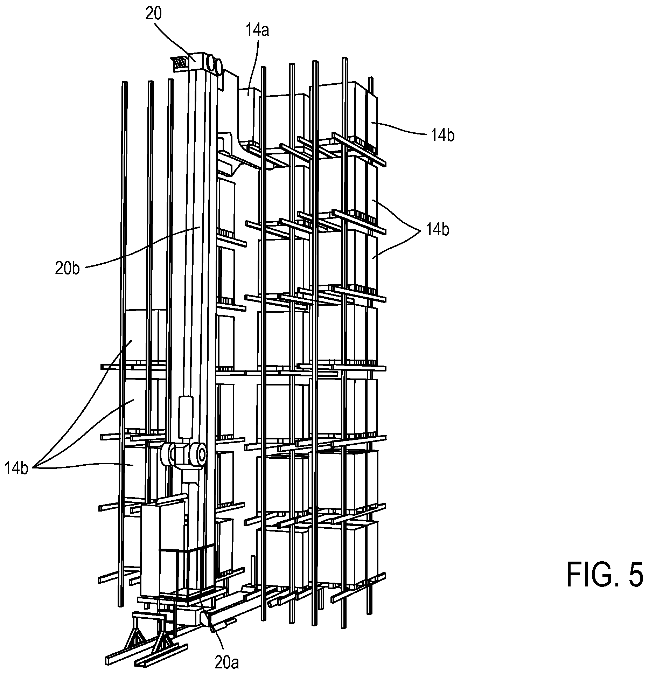

En se référant encore aux figures 1 à 4 et en outre à la figure 5, il y a plusieurs couloirs 14a qui traversent tous les niveaux de stockage du système de stockage de matières premières 14. Les couloirs 14a définissent ensemble avec les rangées 14b correspondantes les emplacements pour stocker les matières premières. Les matières premières peuvent être attribuées aux emplacements dans le système stockage de matières premières 14 en fonction des processus réalisés aux niveaux de production correspondants de l'atelier 12. Par exemple, il est entendu que les palettes esclaves chargées avec des sacs de matières premières peuvent être placées dans des emplacements attribués en fonction des besoins d'une recette en cours et/ou en fonction des besoins d'une recette à venir. Il est aussi éntendu que les palettes esclaves vides, étant associées avec des matières premières spécifiques, peuvent être placées dans des mêmes emplacements attribués aux palettes chargées (c.-à-d., les mêmes palettes esclaves, chargées ou vides, peuvent retourner aux mêmes emplacements associés avec la matière première ou les matières premières associées). Par exemple, si un processus de mélangeage du niveau 12b a besoin d'un sac 1000 rempli d'une matière première utilisé dans ce processus, alors le système de gestion va stocker le sac 1000 au niveau 12b.

Les emplacements sont servis par au moins un robot (ou un dispositif équivalent) qui est capable de placer sélectivement et de retirer sélectivement au moins un sac de matières premières, avec sa palette associée, par rapport au système de stockage de matières premières 14. Le placement sélectif et le retrait sélectif sont effectués sur la base d'une prédiction de matières premières qui est prévue pour un flux généré en fonction de la recette de mélange de caoutchouc choisie. Le robot, qui est choisi parmi des robots disponibles dans le commerce, est représenté comme un dispositif d'empilage 20 avec une navette 20a qui monte et descend un rail 20b en fonction d'un emplacement d'une matière première (par exemple, comme contenue dans le sac 1000 de la figure 4) à l'intérieur du système de stockage de matières premières 14. Le dispositif d'empilage 20 place et récupère des matières premières en fonction d'au moins un flux en cours et des flux à venir. Dans un mode de réalisation, il y a deux navettes 20a qui montent et descendent le rail 20b en même temps que le dispositif se déplace le long du couloir 14a. Il est entendu que le dispositif d'empilage 20 peut être remplacé avec un dispositif équivalent connu par un homme du métier.

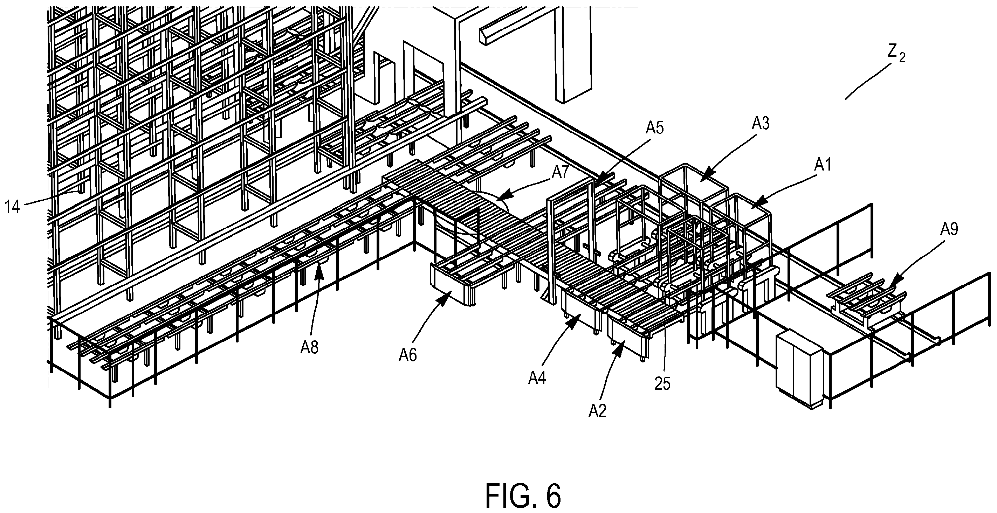

En se référant encore à la figure 5 et en outre à la figure 6, une zone de liaison Z₂ du secteur A est représentée où les matières premières arrivent à l'installation de mélangeage 10 pour être stockées au système de stockage de matières premières 14. Les matières premières ne comprennent pas seulement les charges et les additives en poudre décrits. Elles comprennent aussi des élastomères qui sont régulièrement vendus dans le commerce dans des balles de poids connu. Les élastomères sont sélectionnés parmi un caoutchouc naturel, des divers élastomères synthétiques (par ex., le caoutchouc butadiène-styrène, le caoutchouc polybutadiène, etc.) et divers mélanges d'élastomères. D'autres matières premières peuvent être introduites au secteur A comme entendu par un homme du métier.

A la zone de liaison Z₂, le système de gestion comprend au moins un distributeur de palettes esclave (ou « distributeur ») A1 où les palettes esclave sont empilées (voir la palette esclave P_{E} décrite par rapport à la figure 4). Comme représentée dans la figure 6, le distributeur A1 est vide, mais il est entendu que les palettes esclaves peuvent être stockées dans le distributeur A1 dans une manière connue. Les palettes esclaves empilées sont toujours dédiées à une matière première spécifique ou à une classe de matières premières spécifiques. Un point d'entrée A2 est disposée à côté du distributeur A1 pour qu'une palette esclave P_{E} du distributeur soit chargée avec une ou plusieurs matières premières entrantes au point d'entrée (voir la flèche H de la figure 3). Pour approvisionner un système de stockage automatisé du système de stockage de matières premières 14, la palette esclave P_{E} avec les matières chargées (soit en sac soit en contenant soit en balle) est convoyée au système de stockage automatisé par un convoyeur ou tapis 25. Il est entendu que le convoyeur 25 peut être remplacé par deux ou plusieurs convoyeurs, une combinaison de convoyeurs et tapis, et des moyens de transfert équivalents.

Dans des modes de réalisation où le système de stockage de matières premières 14 utilise deux ou plusieurs systèmes de stockage automatisés, il y a un distributeur et un point d'entrée associés avec chaque système de stockage automatisé. Un deuxième distributeur A3 et un deuxième point d'entrée associé A4 sont donc fournis. Pour approvisionner le deuxième système de stockage automatisé 14d, les palettes esclaves en provenance du deuxième distributeur A3 sont transférées par le convoyeur 25.

La zone de liaison Z₂ inclut un appareil de contrôle A5 grâce auquel la forme des matières premières transférées par le convoyeur 25 est conforme aux emplacements dédiés du système de stockage automatisé. L'appareil de contrôle A5 peut inclure un cadre 31 qui permet le passage libre du convoyeur 25 et ses palettes esclaves P_{E} et sacs 1000 apportés. Pour les sacs 1000 et les autres formes de matières premières obtenues dans le commerce, leurs formes doivent traverser le contrôle A5 pour que le système de gestion puisse transférer seulement les matières premières qui sont conformes aux paramètres des espaces dédiés. Il est entendu que le cadre 31 peut être une barrière (soit physique soit électronique), et ses paramètres peuvent être ajustés en fonction des paramètres des espaces dédiés au système de stockage automatisé.

Un système de surveillance intégré dans le système de gestion assure la livraison des matières premières qui correspondent aux paramètres établis, y compris une correspondance parmi des matières premières commandées et leurs propriétés, des matières premières reçues et leurs propriétés, et des matières premières requises par les processus aux niveaux de production impliqués. Les identifications uniques associées avec chaque matière première et chaque palette esclave sont utilisées pour transférer automatiquement tous les données pertinentes pour stocker les matières premières à un niveau (ou sur plusieurs niveaux) de stockage correct. Si une matière première est chargée sur une palette de livraison différente de la palette esclave P_{E}, alors cette palette de livraison est posée sur la palette esclave P_{E} et les identifications uniques des deux palettes et des matières premières sont associées pour permettre la localisation et le suivi de chaque palette et de chaque matière première. Si le système de surveillance détermine que la matière première passant vers le contrôle A5 n'est pas conforme aux paramètres établis, cette matière première non-conforme est dirigée vers une sortie A6 de la zone de liaison Z₂ (voir la flèche I de la figure 3). Ainsi les matières premières non-conformes sortent du système de gestion en amont du système de stockage des matières premières 14 pour empêcher le stockage des matières premières non-utilisables dans l'atelier 12. Ces matières premières non-conformes qui sortent du système de gestion peuvent être stockées dans un système de stockage séparé en attendant une commande pour ces matières premières par l'atelier 12.

Si le système de surveillance détermine que la matière première passant vers le contrôle A5 est conforme aux paramètres établis, le convoyeur 25 la transfère à une table tournante A7 de la zone de liaison Z₂. La table tournante A7 reçoit chaque matière première conforme après son passage vers le contrôle A5. La table tournante A7 comprend un appareil rotatif qui permet, si besoin, la manipulation du sac pour que l'identification unique de matière première soit reconnue (par exemple, face à un opérateur). La table tournante A7 comprend un moyen de transfert qui s'aligne avec le convoyeur 25 pour transférer les matières premières aux espaces dédiés au système de stockage de matières premières 14.

Le convoyeur 25 transfère les matières premières conformes vers un rail d'accès A8 de la zone de liaison Z₂ qui est aligné avec le système de stockage de matières premières 14. Un véhicule autonome A9 porte les matières premières conformes aux emplacements dédiés du système de stockage automatisé en fonction des données intégrées avec chaque identification unique. Le véhicule autonome A9 peut être choisi parmi des véhicules autonomes dans le commerce y compris les véhicules guidés sur rails comme représenté dans la figure 6.

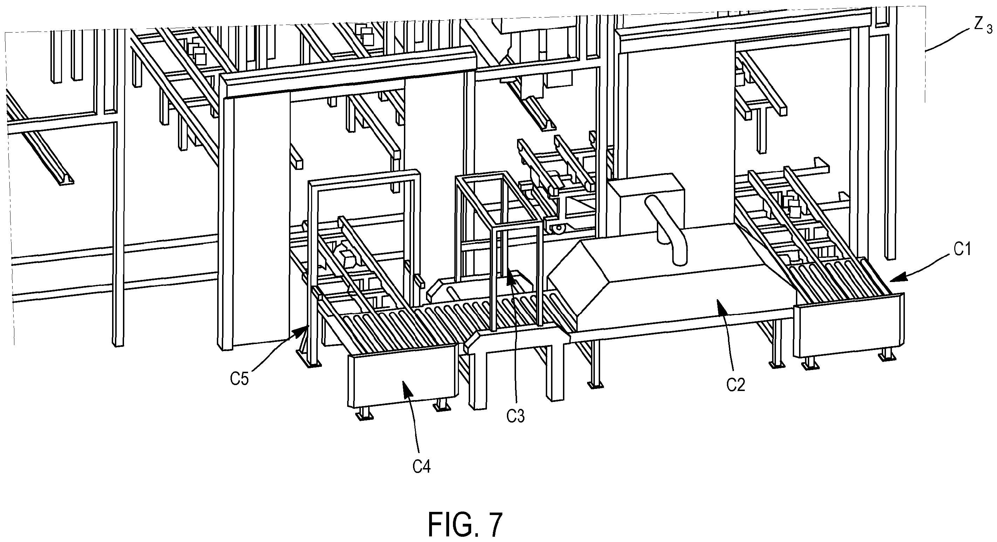

En se référant encore aux figures 1 à 3 et en outre à la figure 7, le système de gestion comprend au moins une zone de traitement Z₃ à proximité du secteur C où les palettes esclaves P_{E} et sont récupérées du système de stockage de matières premières 14. La zone de traitement Z₃ représentée dans la figure 7 est installée à proximité immédiate au niveau de production 12c de l'atelier 12. Il est entendu que des zones de traitements similaires peuvent être installées à d'autres niveaux de production de l'atelier 12 (par exemple, dans la figure 3, voir une deuxième zone de traitement Z_{3'} installée à proximité immédiate au niveau de production de l'atelier 12a).

La zone de traitement Z₃ inclut une sortie C1 où les matières premières commandées sortent du système de stockage de matières premières 14 après leur récupération (voir la flèche J de la figure 3). Les matières premières récupérées sont transférées au niveau de production correspondant (dans cet exemple, le niveau de production 12c de l'atelier 12). Le transfert est réalisé par des moyens connus, par exemple, par des chariots élévateurs, par des véhicules industriels autonomes et/ou par d'autres moyens équivalents. Les palettes esclaves P_{E} ne sortent jamais du système de gestion, et elles sont récupérées et empilées à une station d'empilage C2. Pour certaines palettes esclaves (par exemple, des palettes esclaves qui sont toujours chargées des produits chimiques), le système de gestion peut commander le nettoyage des palettes a une station de nettoyage C3 de la zone de traitement Z₃. Le nettoyage peut être réalisé par aspiration, par brossage, et par d'autres moyens connus pour nettoyer les palettes affectées après leur utilisation dans l'atelier 12 pour satisfaire au moins un flux à venir. Toutes les palettes peuvent être nettoyées, mais les palettes contenant les poudres le seront préférentiellement. A la zone de traitement Z₃, une entrée C4 est installée pour accepter les palettes dédiées vides en provenance du niveau de production correspondant (dans cet exemple, le niveau de production 12c de l'atelier 12). Un convoyeur transfère les palettes dédiées vides vers un appareil de contrôle C5 de la zone de traitement Z₃ qui assure la conformité, des palettes dédiées, aux emplacements dédiés dans le système de stockage automatisé (voir la flèche K de la figure 3). L'appareil de contrôle C5 fonctionne similairement à l'appareil de contrôle A5 décrit au-dessus.

A chaque niveau de production de l'atelier 12, le système de gestion comprend des lignes de transfert correspondantes sur lesquelles des convoyeurs correspondants se déplacent par rapport au système de stockage de matières premières 14. En se référant encore à la figure 3, des lignes de transfert longitudinales s'étendent dans un sens longitudinal et parallèles par rapport aux couloirs 14a. Les lignes de transfert longitudinales comprennent des lignes de transfert sortante sur laquelle les palettes chargées des matières premières associées sortent du système de stockage de matières premières 14 pour alimenter l'équipement au niveau de production correspondant de l'atelier 12 (e.g., l'équipement réalisant les processus de mélangeage dans un mélangeur interne)(voir les flèches M de la figure 3). Les lignes de transfert longitudinales comprennent aussi des lignes de transfert entrant sur laquelle les palettes vides entrent dans le système de stockage de matières premières 14 en provenance du **niveau** de production correspondant (voir les flèches N de la figure 3). Les palettes vides peuvent retourner ou non à un emplacement analogue à l'emplacement duquel la palette était récupérée ou directement dans la zone de liaison Z₂.

Le système de gestion peut donc enregistrer la récupération des matières premières commandées et les palettes associées. Le système de gestion est capable de mettre à jour le stockage des matières premières au système de stockage de matières premières 14 et la disponibilité des palettes associées. Le système de gestion peut renvoyer les palettes vides vers le système de stockage de matières premières 14 (voir la figure 6). Si besoin, des palettes esclaves vides P_{E} peuvent être placés dans le système de stockage de matières premières 14 pour satisfaire un flux à venir. Une meilleure efficacité est donc obtenue en réduisant les trajets de transit pour recharger les palettes esclaves.

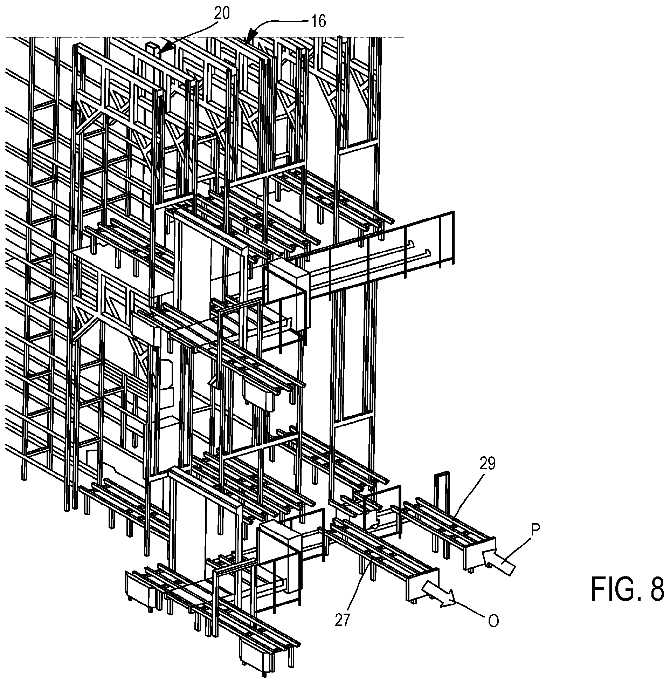

En se référant encore aux figures 1 à 7 et en outre à la figure 8, le système de gestion comprend en outre le système de stockage de produits semi-finis 16 auquel les produits semi-finis en provenance de l'atelier 12 sont stockés (par exemple, jusqu'à leur utilisation dans un ou plusieurs processus en aval de l'atelier). Conformément aux besoins de la recette choisie, les produits semi-finis sont stockés sur des palettes associées. Les produits semi-finis et leurs palettes associées sont gérés le système de stockage de produits semi-finis 16 par les palettes esclaves (ou « fausses palettes ») P_{E}. Il y a plusieurs couloirs qui traversent tous les niveaux de système de stockage de produits semi-finis 16 et qui définissent ensemble, avec des rangées correspondantes, les emplacements pour stocker les produits semi-finis. Les produits semi-finis peuvent être attribués aux emplacements dans le système de stockage de produits semi-finis en fonction des processus réalisés aux niveaux de production correspondants. Il est entendu que les palettes esclaves associées avec des produits semi-finis spécifiques (soit chargées soit vides) peuvent être placées dans les mêmes emplacements attribués (c.-à-d., les mêmes palettes, chargées ou vides, peuvent retourner aux mêmes emplacements ou aux mêmes secteurs associés avec les produits semi-finis associés).

Les emplacements du système de stockage de produits semi-finis 16 sont servis par un robot ou un dispositif équivalent (par exemple, par un dispositif d'empilage 20 comme décrit par rapport au système de stockage de matières premières 14 et représenté par la figure 5). Le placement sélectif et le retrait sélectif sont effectués sur la base d'une prédiction de produits semi-finis qui est prévue pour un flux généré. A chaque niveau de production de l'atelier 12, le système de gestion comprend des lignes de transfert correspondantes sur lesquelles des convoyeurs correspondants se déplacent par rapport au système de stockage de produits semi-finis 16.

Le système de gestion peut donc enregistrer le stockage et la récupération des produits semi-finis et leurs palettes associées. Le système de gestion est capable de mettre à jour le stockage des produits semi-finis au système de stockage de produits semi-finis 16 et la disponibilité des palettes associées. Le système de gestion est aussi capable de placer des palettes esclaves vides P_{E} dans le système de stockage de produits semi-finis 16 pour satisfaire un flux à venir.

Dans un exemple d'un flux réalisé dans le système de stockage de produits semi-finis 16, le système de gestion identifie un produit semi-fini pour sa récupération et le récupère du système de stockage de produits semi-finis. Le système de gestion envoie le produit semi-fini commandé à un convoyeur sortant 27 (voir la flèche O de la figure 8). Un opérateur (soit humaine soit machine) prend le produit semi-fini commandé (soit manuellement soit automatiquement) et sa palette associée pour utiliser le produit semi-fini dans un autre processus de mélangeage. La palette esclave reste dans le système de gestion pour son utilisation dans le système de stockage de produits semi-finis 16. La palette esclave peut être nettoyée (par exemple, comme décrite au-dessus par rapport à la zone de traitement Z₃), et elle peut être transportée à un convoyeur entrant 29 où elle reste en attente. Les palettes associées vides sont collectées pour leur retour au stockage sur la palette esclave en attente (voir la flèche P de la figure 8).

En utilisant le système de gestion, des palettes esclaves respectives (chargées et vides) peuvent effectuer des opérations de transfert et de livraison dans le cadre des processus exécutés aux niveaux de production correspondants de l'atelier 12, réalisant ainsi des opérations de transfert et de distribution sur de courtes distances sans pollution des niveaux de production intermédiaires. L'entrée et la sortie des palettes chargées et vides peuvent ainsi être réalisées efficacement dans les deux systèmes de stockage.

Dans un mode de réalisation du procédé qui va satisfaire un flux, le procédé inclut une étape de génération d'au moins un flux pour réaliser au moins une recette de mélange de caoutchouc. Dans certains de ces modes de réalisation, plusieurs flux peuvent être générés suivant la sélection d'un utilisateur.

Le procédé comprend une étape d'identification des matières premières qui satisfont au moins un flux généré. Compte tenu du temps nécessaire pour assembler les matières premières nécessaires à la réalisation de la recette de mélange choisie, le système de gestion peut identifier des emplacements où les matières premières sont disponibles sur des palettes associées (les palettes esclaves et les palettes dédiées). Cette identification peut être faite en fonction du temps minimum imparti pour réaliser le mélangeage. En outre, le système de gestion peut identifier si des matières premières nécessaires pour réaliser le mélangeage sont manquantes. Dans ce cas, le système de gestion peut commander les matières premières manquantes pour réaliser leur récupération du système de stockage de matières premières 14 et leur livraison au niveau (ou aux niveaux) de production correspondant de l'atelier 12. En utilisant des dispositifs connus (par exemple, le dispositif d'empilage 20), les palettes chargées avec les matières premières commandées sont stockées dans le, et elles sont récupérées du, système de stockage des matières premières 14 en fonction du processus de l'atelier où ils sont requis.

Le procédé peut inclure une étape de réalisation d'au moins une activité de planification qui est nécessaire pour atteindre le flux en cours et/ou au moins un flux à venir. L'activité de planification peut comporter une ou plusieurs étapes, comprenant au moins des étapes suivantes:
- de détermination des niveaux attendus de stockage au système de matières premières 14 et au système de stockage de produits semi-finis 16 à la fin du flux en cours;
- de détermination de l'état du flux en cours ;
- de prédiction des flux qui seront réalisées en conséquence du flux en cours et des flux à venir ; et
- de détermination des matières premières qui vont être utilisées dans des flux à venir (y compris la durée de stockage de matières premières avant leur utilisation).

Ces déterminations peuvent être effectuées sur la base d'un ou de plusieurs facteurs, y compris, mais sans s'y limiter, l'achèvement d'un ou plusieurs flux (et le stockage résultant des matières premières restant dans le système de gestion), la génération et l'adaptation des futurs flux et le niveau du stockage actuel au système de stockage des produits semi-finis 16.

Le procédé inclut une étape de commande d'au moins une matière première qui satisfait le flux en cours. Pendant cette étape, le système de contrôle envoie au système de stockage de matières premières 14 une commande pour la récupération, par exemple, la récupération des palettes esclaves P_{E} associées avec ces matières premières.

Le procédé inclut une étape de récupération automatique des palettes esclaves P_{E} commandées qui satisfont le flux en cours. Cette étape peut inclure une étape de déterminer si une palette esclave doit être encore chargée avec la matière première associée.

Si les matières premières stockées dans le système de stockage des matières premières 14 ne satisfont pas le premier flux, le système de gestion peut adapter le flux pour utiliser des matières premières disponibles. Ce flux adapté est réalisé en même temps que le système de gestion peut commander des matières premières nécessaires pour réaliser le flux original. Ainsi, chacun des paramètres actuels dans le système de stockage des matières premières 14 et le stock prévu dans le système de stockage des produits semi-finis 16 sont surveillés dynamiquement afin d'effectuer un classement dynamique des flux de sorte que le meilleur flux (par exemple, le meilleur flux en fonction du temps) soit toujours réalisable. Ceci peut être effectué afin de donner la priorité à la production en fonction de la demande de produits semi-finis, du surplus de produits semi-finis, de la pénurie des matières premières et des facteurs associés.

Le procédé inclut une étape d'expédition automatique des matières premières commandées en fonction du flux en cours. Les palettes associées qui sont récupérées du système de stockage de matières premières 14 sont envoyées vers un niveau de production correspondant de l'atelier 12 pour réaliser les processus dans lesquels les matières premières commandées sont requises. Par exemple, dans le cas où une quantité suffisante de silice est manquante dans l'atelier 12, le système de contrôle peut commander la récupération des contenants de silice stockés aux niveaux intermédiaires du système de stockage de matières premières 14. Les palettes esclaves P_{E} associées avec les silices commandées sont dirigées par des convoyeurs vers l'atelier 12 (et plus particulièrement vers le niveau de production impliqué).

Le procédé inclut une étape, après réalisation des processus de mélangeage qui produisent des produits semi-finis, de chargement des produits semi-finis sur des palettes dédiées associées. Le système de contrôle peut désigner le(s) niveau(x) de stockage de produits semi-finis au système de stockage de produits semi-finis 16 où les produit semi-finis seront stockés (par exemple, en attendant des processus en aval du système de gestion). Le système de gestion peut gérer les produits semi-finis et leurs palettes dédiées associées de la même façon que la gestion des matières premières et leurs palettes esclaves associées au système de stockage de matières premières 14.

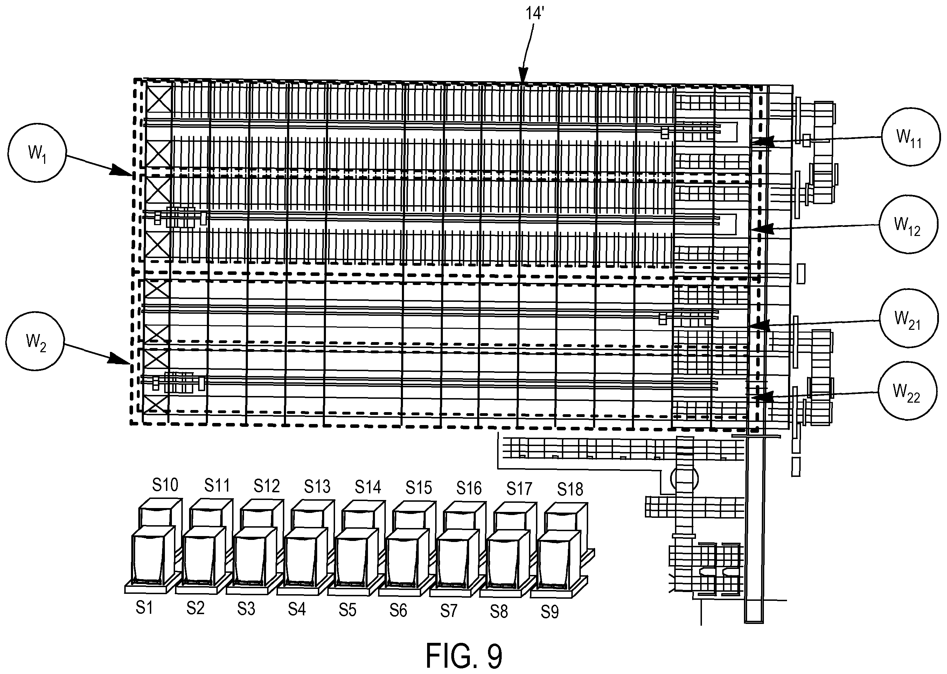

En se référant aux figures 9 à 11, un exemple de gestion de flux automatisé, réalisé par le système de gestion de l'invention, est représenté par rapport à un système de stockage de matières premières 14'. Dans cet exemple, le système de stockage de matières premières 14' inclut deux entrepôts W₁, W₂, et chaque entrepôt inclut deux systèmes de stockage automatisés (W₁₁, W₁₂), (W₂₁, W₂₂). En se référant à la figure 9, pour faire un stockage de noir de carbone selon un flux prévu, un batch de noir de carbone arrive au système de stockage de matières premières 14 dans 18 sacs (S1, S2, S3, S4, S5, S6, S7, S8, S9, S10, S11, S12, S13, S14, S15, S16, S17, S18) Tous les sacs représentés et leurs palettes associées sont transportables par des palettes esclaves P_{E} du système de gestion.

Le flux prévu implique les systèmes de stockage automatisé W₁₁, W₁₂ de l'entrepôt W₁.

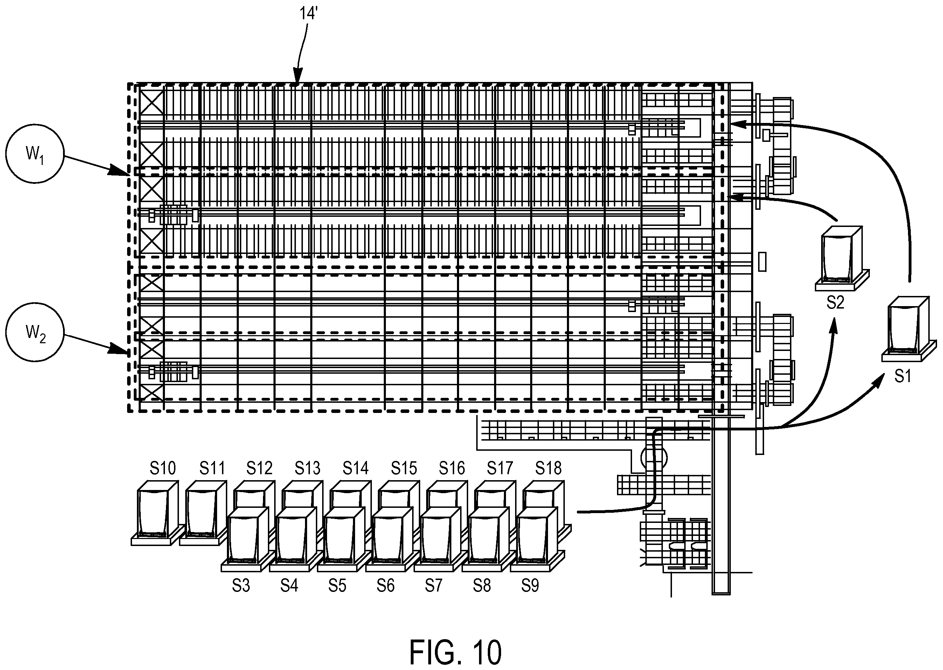

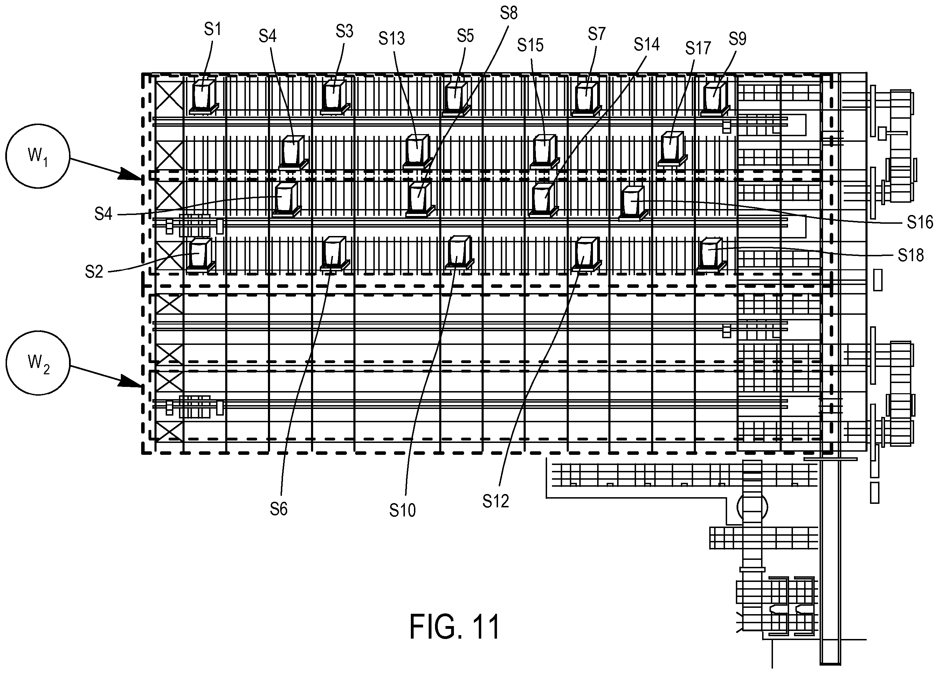

Chaque système de stockage automatisé W₁₁, W₁₂ inclut plusieurs niveaux de stockage arrangés dans des rangées séparées par un couloir Wc. Un dispositif d'empilage W₂₀ qui traverse un couloir correspondant sert chaque rangée de chaque système de stockage automatisé. En se référant à la figure 10, en réalisant le flux, le système de gestion suit des règles de redondance établies par le plan de flux pour assurer la disponibilité de noir de carbone à travers l'entrepôt W₁. En suivant les règles de redondance, le système de gestion dirige automatiquement chaque sac à son tour vers les deux systèmes de stockage automatisé W₁₁, W₁₂. En conséquence, le système de gestion dirige le sac S1 vers le système de stockage automatisé W₁₁, le sac S2 vers le système de stockage automatisé W₁₂, le sac S3 vers le système de stockage automatisé W₁₁, le sac S4 vers le système de stockage automatisé W₁₂, etc. Lorsque le dernier sac S18 est stocké au système de stockage automatisé W₁₂, le batch est divisé également entre les deux systèmes de stockage automatisé W₁₁, W₁₂ (voir la figure 11). La commande de noir de carbone effectuée pendant les processus de l'atelier 12 est donc facilement satisfaite dans le cadre du flux.

Un cycle du procédé peut être fait par la commande du PLC et peut inclure des pré-programmations des informations de gestion. Par exemple, un profil peut être associé à chaque matière première comprenant un poids de la matière première commandée, l'emplacement de la matière première commandée, et la réception et l'envoi de données indiquant le transfert de la matière première commandée au niveau de production correspondant dans l'atelier 12. Le PLC contrôle la liste des matières premières commandées et les palettes associées. Pour toutes les réalisations, un profil pourrait être mis en place pour assurer la reproductibilité d'un flux idéal pour réaliser une recette de mélange de caoutchouc choisie.

Le système de gestion peut inclure un système de surveillance qui peut surveiller un ou plusieurs processus dans le système de gestion, y compris, sans limitation, un ou plusieurs processus de mélangeage de l'atelier 12 (où la surveillance peut être effectuée à chaque niveau de production), et un ou plusieurs processus de sécurité (par exemple, pour assurer le passage continu et le passage sécurisé des matières premières et des produits semi-finis). Au moins une partie du système de surveillance peut être fournie dans un dispositif portable telle qu'un dispositif de réseau mobile (par exemple, un téléphone mobile, un ordinateur portable, un dispositif portable connecté au réseau, des vêtements portables connectés au réseau et/ou toutes combinaisons et/ou tous équivalents).

Dans des modes de réalisation de l'invention, le système de gestion peut recevoir de la parole ou d'autres données audio représentant une demande d'emplacement des matières premières identifiées et/ou le statut actuel des produits semi-finis. La demande peut inclure une demande pour l'état actuel d'un cycle de mélange de caoutchouc, et/ou une demande pour la progression du processus de création de la recette de mélange par l'atelier 12. Une réponse générée peut être représentée de manière audible, visuelle, tactile (par exemple, en utilisant une interface haptique) et/ou virtuelle.

Un ou plusieurs sacs et/ou palettes peuvent comporter un émetteur et/ou un récepteur qui facilitent la communication entre eux et également avec le système de contrôle pour permettre un flux autonome. Tous peuvent communiquer avec un module (par exemple, par un ou plusieurs protocoles de communication sans fil) pour recevoir des informations, par exemple pour identifier et pour réserver des palettes disponibles à utiliser avec des matières premières spécifiques et pour identifier et pour réserver des espaces disponibles dans les systèmes de stockage. Le module peut générer des affectations d'emplacement et de palette sur la base, par exemple, du type de matière première nécessaire pour exécuter le processus à un certain niveau de production de l'atelier 12.

Dans un mode de réalisation, le procédé peut comprendre une étape de classification les flux générés par moyens d'auto-apprentissage. Cette étape comprend l'entraînement du système de gestion pour reconnaître le meilleur flux pour une recette de mélange de caoutchouc choisie. L'étape d'entraînement inclut la réception d'une identification d'au moins une matière première à utiliser dans la recette de mélange de caoutchouc choisie et la réception d'une identification d'au moins une destination pour la matière première identifiée. Cette étape inclut en outre l'étape de détermination de la disponibilité d'au moins une destination identifiée dans l'atelier 12 (étant au moins un niveau de production 12a, 12b, 12c de l'atelier) et l'étape de transfert de la matière première identifiée vers la destination identifiée. La meilleure destination disponible peut être identifiée sur la base d'une étape de classement de tous les niveaux de production qui ont besoin des matières premières identifiées. L'étape d'entraînement peut inclure en outre l'étape de détermination d'une destination identifiée qui supporte le meilleur flux, tel que déterminé sur la base du temps nécessaire pour réaliser la recette de mélange de caoutchouc choisie et/ou les matières premières qui restent disponibles. La meilleure destination identifiée disponible peut être la destination identifiée ayant la première disponibilité pour accepter la matière première identifiée. La meilleure destination identifiée disponible peut être la destination identifiée ayant le plus de capacité à supporter la génération d'un certain volume de production de la recette de mélange de caoutchouc choisie. Le meilleur flux peut changer d'un cycle à l'autre en fonction de l'état actuel du système (par exemple, en fonction de taux de stockage de produits semi-finis dans le système de stockage de produits semi-finis 16). Le système de contrôle peut être rempli avec des données correspondant à des flux favorables pour chacune d'une pluralité de recettes de mélange de caoutchouc choisies.

Les termes « au moins un(e) » et « un(e) ou plusieurs» sont utilisés de manière interchangeable. Les gammes qui sont présentées comme se situant « entre a et b » englobent les valeurs « a » et « b ».

Bien que des modes de réalisation particuliers de l'appareil révélé aient été illustrés et décrits, on comprendra que divers changements, additions et modifications peuvent être pratiqués sans s'écarter de l'esprit ni de la portée du présent exposé. Par conséquent, aucune limitation ne devrait être imposée sur la portée de l'invention décrite à l'exception de celles exposées dans les revendications annexées.

## Revendications

1. Système de gestion de flux automatisé pour gérer un flux de matières premières et un flux de produits semi-finis pour réaliser un ou plusieurs processus de mélangeage de caoutchouc, le système étant **caractérisé par** :
une installation de mélangeage de caoutchouc (10) avec un atelier de mélangeage de caoutchouc (12) où des processus de mélangeage peuvent être réalisés en fonction d'une recette de mélange de caoutchouc choisie, l'atelier de mélangeage de caoutchouc comprenant plusieurs niveaux de production (12a, 12b, 12c) qui nécessitent la fourniture des matières premières pour réaliser les processus de mélangeage correspondants à chaque niveau de production;
des moyens de stockage automatisés ayant plusieurs niveaux de stockage et un ou plusieurs niveaux de stockage liés avec chaque niveau de production de l'atelier de mélange de caoutchouc (12), les moyens de stockage automatisés du système de gestion comprenant :
- au moins un système de stockage de matières premières (14) avec plusieurs niveaux de stockage pour faciliter le stockage, le transfert et la récupération des matières premières en fonction des processus réalisés aux niveaux de production de l'atelier de mélange de caoutchouc (12), et avec lequel le système de gestion peut générer un ou plusieurs flux de matières premières;
- un système de stockage de produits semi-finis (16) avec plusieurs niveaux de stockage auxquels les produits semi-finis en provenance de l'atelier de mélange de caoutchouc (12) peuvent être stockés, les produits semi-finis pouvant être attribués à des places en fonction des processus réalisés aux niveaux de production correspondants à l'atelier de mélange de caoutchouc (12), et avec lequel le système de gestion peut générer un ou plusieurs flux de produits semi-finis ; et
- une ou plusieurs palettes esclaves (P_{E}) incorporées en permanence dans chaque moyen de stockage automatisé qui comprennent des zones virtuelles de stockage afin de faciliter la gestion du stock et des flux des matières premières et des produits semi-finis.

2. Système de gestion de la revendication 1, dans lequel l'installation de mélangeage (10) comprend plusieurs secteurs dans lesquels des processus de mélangeage peuvent être réalisés, et chaque secteur est dédié à un processus distinct avec lequel le système de gestion est lié, les secteurs comprenant :
- un secteur (A) avec une zone de liaison (Z₂) où les matières premières qui arrivent à l'installation de mélangeage (10) peuvent être introduites ;
- un secteur (B) avec une zone de stockage des matières premières ;
- un secteur (C) auquel l'atelier de mélangeage de caoutchouc (12) est disposé avec au moins une zone de traitement (Z₃) où les palettes esclaves (P_{E}) peuvent être récupérées du système de stockage de matières premières (14) ;
- un secteur (D) avec une zone de stockage des produits semi-finis ; et
- un secteur (E) avec une zone de transfert (Z₁) où les produits semi-finis peuvent sortir de l'installation de mélangeage (10).

3. Système de gestion de la revendication 2, comprenant en outre, à la zone de liaison (Z₂) :
- au moins un distributeur des palettes esclave (A1, A3) où les palettes esclaves (P_{E}) du système de stockage de matières premières (14) peuvent être empilées ;
- un point d'entrée (A2, A4) disposée à côté du distributeur pour qu'une palette esclave au distributeur soit chargée avec une ou plusieurs matières premières entrantes au point d'entrée ;
- un appareil de contrôle (A5) pour contrôler la forme des matières premières transférées ;
- une sortie (A6) où les matières premières non-conformes peuvent sortir du système de gestion ;
- une table tournante (A7) pour réaliser une manipulation d'une matière première pour qu'une identification unique de matière première soit reconnue ;
- un rail d'accès (A8) de la zone de liaison (Z₂) qui est en alignement avec le système de stockage de matières premières (14) ; et
- un véhicule autonome (A9) pour porter les matières premières conformes aux espaces dédiés au système de stockage automatisé en fonction des données intégrées avec chaque identification unique.

4. Système de gestion de la revendication 2 ou la revendication 3, comprenant en outre, à la zone de traitement (Z₃) :
- une sortie (C1) où les matières premières commandées peuvent sortir du système de stockage de matières premières (14) après leur récupération, et les matières premières récupérées peuvent être transférées au niveau de production correspondant de l'atelier mélangeage de caoutchouc (12) ;
- une station d'empilage (C2) où les palettes esclaves (P_{E}) peuvent être récupérées et empilées ;
- une station de nettoyage (C3) facultative où les palettes esclaves (P_{E}) peuvent être nettoyées ;
- une entrée (C4) installée pour accepter des palettes dédiées vides en provenance d'un niveau de production correspondant de l'atelier de mélangeage de caoutchouc (12) ; et
- un appareil de contrôle (C5) pour assurer la conformité des palettes dédiées aux espaces dédiés au système de stockage automatisé.

5. Système de gestion de l'une quelconque des revendications 1 à 4, comprenant en outre au moins un robot (20) pour placer sélectivement et pour retirer sélectivement les matières premières dans le stockage de matières premières (14) et les produits semi-finis dans le système de stockage de produits semi-finis (16).

6. Système de gestion de l'une quelconque des revendications 2 à 5, comprenant en outre au moins un des éléments suivants :
- des lignes de transfert sur lesquelles des convoyeurs correspondants peuvent se déplacer par rapport au système de stockage de matières premières (14) et au système de stockage de produits semi-finis (16) ; et
- un système de contrôle pour identifier les matières premières et les gérer en fonction d'un flux optimisé pour créer la recette de mélange de caoutchouc choisie.

7. Système de gestion de l'une quelconque des revendications 1 à 6, dans lequel :
- les palettes esclaves du système de stockage de matières premières peuvent être chargées avec une ou plusieurs matières premières en fonction de la recette de mélange de caoutchouc choisie ; et
- les palettes esclaves du système de stockage de produits semi-finis peuvent être chargées avec une ou plusieurs produits semi-finis commandés en fonction de la recette de mélange de caoutchouc choisie

8. Système de gestion de la revendication 7, dans lequel :
- les matières premières comprennent au moins une matière première choisie parmi un ou plusieurs noirs de carbone, une ou plusieurs gommes, une ou plusieurs silices, un ou plusieurs produits chimiques et un ou plusieurs soufres ; et
- les produits semi-finis comprennent au moins une matière choisie parmi un ou plusieurs masterbatchs, une ou plusieurs matières semi-finies et une ou plusieurs matières à recycler.

9. Procédé automatisé de gestion de flux réalisé par le système de gestion de l'une quelconque des revendications 1 à 8 dans une installation de mélangeage qui réalise la fabrication des mélanges de caoutchouc, le procédé comprenant les étapes suivantes :
- l'étape d'identification d'une catégorie pour chacune d'une pluralité de matières premières à utiliser dans l'installation de mélangeage, dans laquelle la catégorie identifiée est déterminée parmi une pluralité de catégories différentes en fonction des propriétés d'une recette de mélange de caoutchouc choisie ;
- l'étape d'identification d'une destination dans le système de gestion vers laquelle les matières premières doivent être transportées pour chaque catégorie identifiée; et
- l'étape de génération d'un ou de plusieurs flux de matières premières entre le système de stockage de matières premières (14) et l'atelier de mélange de caoutchouc (12), cette étape comprenant l'étape de transportation des matières premières vers la destination identifiée.

10. Procédé de la revendication 9, comprenant en outre les étapes suivantes :
- l'étape de génération d'un ou des plusieurs flux de produits semi-finis entre l'atelier de mélange de caoutchouc (12) et le système de stockage de produits semi-finis (16) ; et
- l'étape de classification des flux de matières premières générés et des flux de produits semi-finis générés par moyens d'auto-apprentissage.

## Patentansprüche

1. Automatisiertes Flussverwaltungssystem zur Verwaltung
eines Rohstoffflusses und eines Halbzeugflusses zur Durchführung eines oder mehrerer Kautschukcompoundierprozesse, wobei das System durch Folgendes gekennzeichnet ist:
eine Kautschukcompoundieranlage (10) mit einer Kautschukcompoundierstation (12), wo Compoundierprozesse in Abhängigkeit von einem ausgewählten Kautschukmischrezept durchgeführt werden können, wobei die Kautschukcompoundierstation mehrere Produktionsebenen (12a, 12b, 12c) beinhaltet, denen die Rohstoffe zur Durchführung der Compoundierprozesse, die jeder Produktionsebene entsprechen, bereitgestellt werden müssen;
automatisierte Lagermittel, die mehrere Lagerebenen und ein oder mehrere Lagerebenen, die mit jeder Produktionsebene der Kautschukmischstation (12) verbunden sind, aufweisen, wobei die automatisierten Lagermittel des Verwaltungssystems Folgendes beinhalten:
- mindestens ein Rohstofflagersystem (14) mit mehreren Lagerebenen, um die Lagerung, den Transfer und die Entnahme der Rohstoffe in Abhängigkeit von den in den Produktionsebenen der Kautschukmischstation (12) durchgeführten Prozesse zu ermöglichen, und mit dem das Verwaltungssystem einen oder mehrere Rohstoffflüsse generieren kann;
- ein Halbzeuglagersystem (16) mit mehreren Lagerebenen, in denen die aus der Kautschukmischstation (12) kommenden Halbzeuge gelagert werden können, wobei die Halbzeuge in Abhängigkeit von den Prozessen, die in den entsprechenden Produktionsebenen in der Kautschukmischstation (12) durchgeführt werden, Plätzen zugeordnet werden können, und mit dem das Verwaltungssystem einen oder mehrere Halbzeugflüsse generieren kann; und
- eine oder mehrere Slave-Paletten (P_{E}), die dauerhaft in jedes automatisierte Lagermittel eingegliedert sind und virtuelle Lagerzonen beinhalten, um die Verwaltung der Bestände und der Flüsse der Rohstoffe und Halbzeuge zu ermöglichen.

2. Verwaltungssystem nach Anspruch 1, wobei die Compoundieranlage (10) mehrere Sektoren beinhaltet, in denen Compoundierprozesse durchgeführt werden können, und jeder Sektor für einen eigenständigen Prozess vorgesehen ist, mit dem das Verwaltungssystem verbunden ist, wobei die Sektoren Folgendes beinhalten:
- einen Sektor (A) mit einer Verbindungszone (Z₂), wo die Rohstoffe, die an der Compoundieranlage (10) ankommen, eingebracht werden können;
- einen Sektor (B) mit einer Lagerzone für die Rohstoffe;
- einen Sektor (C), in dem die Kautschukcompoundierstation (12) angeordnet ist, mit mindestens einer Verarbeitungszone (Z₃), wo die Slave-Paletten (P_{E}) aus dem Rohstofflagersystem (14) entnommen werden können;
- einen Sektor (D) mit einer Lagerzone für die Halbzeuge; und
- einen Sektor (E) mit einer Transferzone (Z₁), wo die Halbzeuge die Compoundieranlage (10) verlassen können.

3. Verwaltungssystem nach Anspruch 2, ferner beinhaltend, in der Verbindungszone (Z₂):
- mindestens einen Verteiler der Slave-Paletten (A1, A3), wo die Slave-Paletten (P_{E}) des Rohstofflagersystems (14) gestapelt werden können;
- einen Eingangspunkt (A2, A4), der neben dem Verteiler angeordnet ist, damit eine Slave-Palette an dem Verteiler mit einem oder mehreren Rohstoffen, die am Eingangspunkt hereinkommen, beladen werden kann;
- ein Kontrollgerät (A5), um die Form der transferierten Rohstoffe zu kontrollieren;
- einen Ausgang (A6), wo die nichtkonformen Rohstoffe das Verwaltungssystem verlassen können;
- einen Drehtisch (A7), um eine Handhabung eines Rohstoffs durchzuführen, damit eine eindeutige Rohstoffkennzeichnung erkannt wird;
- eine Zugangsschiene (A8) der Verbindungszone (Z₂), die entsprechend dem Rohstofflagersystem (14) ausgerichtet ist; und
- ein autonomes Fahrzeug (A9), um die konformen Rohstoffe in Abhängigkeit von den in jede eindeutige Kennzeichnung integrierten Daten zu den spezifischen Räumen in dem automatisierten Lagersystem zu bringen.

4. Verwaltungssystem nach Anspruch 2 oder Anspruch 3, ferner beinhaltend, in der Verarbeitungszone (Z₃):
- einen Ausgang (C1), wo die angeforderten Rohstoffe das Rohstofflagersystem (14) nach ihrer Entnahme verlassen können und die entnommenen Rohstoffe zur entsprechenden Produktionsebene der Kautschukcompoundierstation (12) transferiert werden können;
- eine Stapelstation (C2), wo die Slave-Paletten (P_{E}) entnommen und gestapelt werden können;
- eine fakultative Reinigungsstation (C3), wo die Slave-Paletten (P_{E}) gereinigt werden können;
- einen Eingang (C4), der eingerichtet ist, um leere spezifische Paletten anzunehmen, die von einer entsprechenden Produktionsebene der Kautschukcompoundierstation (12) kommen; und
- ein Kontrollgerät (C5), um die Konformität der spezifischen Paletten mit den spezifischen Räumen in dem automatisierten Lagersystem sicherzustellen.

5. Verwaltungssystem nach einem der Ansprüche 1 bis 4, ferner beinhaltend mindestens einen Roboter (20), um die Rohstoffe in dem Rohstofflager (14) und die Halbzeuge in dem Halbzeuglagersystem (16) selektiv zu platzieren bzw. selektiv daraus zu entnehmen.

6. Verwaltungssystem nach einem der Ansprüche 2 bis 5, ferner beinhaltend mindestens eines der folgenden Elemente:
- Transferstraßen, auf denen sich entsprechende Förderer in Bezug auf das Rohstofflagersystem (14) und das Halbzeuglagersystem (16) bewegen können; und
- ein Kontrollsystem, um die Rohstoffe zu identifizieren und sie in Abhängigkeit von einem optimierten Fluss zu verwalten, um das ausgewählte Kautschukmischrezept zu erzeugen.

7. Verwaltungssystem nach einem der Ansprüche 1 bis 6, wobei:
- die Slave-Paletten des Rohstofflagersystems in Abhängigkeit von dem ausgewählten Kautschukmischrezept mit einem oder mehreren Rohstoffen beladen werden können; und
- die Slave-Paletten des Halbzeuglagersystems in Abhängigkeit von dem ausgewählten Kautschukmischrezept mit einem oder mehreren angeforderten Halbzeugen beladen werden können.

8. Verwaltungssystem nach Anspruch 7, wobei:
- die Rohstoffe mindestens einen Rohstoff beinhalten, der aus einem oder mehreren Rußen, einem oder mehreren Gummis, einer oder mehreren Kieselsäuren, einem oder mehreren chemischen Produkten und einem oder mehreren Schwefeln ausgewählt wird; und
- die Halbzeuge mindestens einen Stoff beinhalten, der aus einem oder mehreren Masterbatches, einem oder mehreren halbfertigen Stoffen und einem oder mehreren zu recycelnden Stoffen ausgewählt wird.

9. Automatisiertes Flussverwaltungsverfahren, das durch das Verwaltungssystem nach einem der Ansprüche 1 bis 8 in einer Compoundieranlage durchgeführt wird, die die Herstellung der Kautschukmischungen durchführt, wobei das Verfahren die folgenden Schritte beinhaltet:
- den Schritt des Identifizierens einer Kategorie für jeden einer Vielzahl von Rohstoffen, die in der Compoundieranlage verwendet werden sollen, wobei die identifizierte Kategorie in Abhängigkeit von den Eigenschaften eines ausgewählten Kautschukmischrezepts aus einer Vielzahl unterschiedlicher Kategorien bestimmt wird;
- den Schritt des Identifizierens eines Zielorts in dem Verwaltungssystem, zu dem die Rohstoffe transportiert werden sollen, für jede identifizierte Kategorie; und
- den Schritt des Generierens eines oder mehrerer Rohstoffflüsse zwischen dem Rohstofflagersystem (14) und der Kautschukmischstation (12), wobei dieser Schritt den Schritt des Transportierens der Rohstoffe zu dem identifizierten Zielort beinhaltet.

10. Verfahren nach Anspruch 9, ferner beinhaltend die folgenden Schritte:
- den Schritt des Generierens eines oder der mehreren Halbzeugflüsse zwischen der Kautschukmischstation (12) und dem Halbzeuglagersystem (16); und
- den Schritt des Klassifizierens der generierten Rohstoffflüsse und der generierten Halbzeugflüsse durch selbstlernende Mittel.

## Claims

1. An automated flow management system for managing a flow of raw materials and a flow of semi-finished products in order to carry out one or more rubber mixing processes, the system being **characterized by**:
- a rubber mixing facility (10) with a rubber mixing workshop (12) in which processes can be carried out according to a chosen rubber compound recipe, the rubber mixing station comprising several production levels (12a, 12b, 12c) that require the supply of raw materials in order to carry out the corresponding mixing processes at each production level;
automated storage means having several storage levels and one or more storage levels that are linked to each production level of the rubber mixing workshop (12), the automated storage means of the management system comprising:
- at least one raw material storage system (14) with several storage levels to facilitate the storage, transfer and retrieval of the raw materials depending on the processes carried out at the production levels of the rubber mixing workshop (12), and with which the management system can generate one or more flow(s) of raw materials;
- a semi-finished product storage system (16) with several storage levels at which the semi-finished products from the rubber mixing workshop (12) can be stored, the semi-finished products being allocated to places depending on the processes carried out at the corresponding production levels in the rubber mixing workshop (12), and with which the management system can generate one or more flows of semi-finished products; and
- one or more slave pallets (P_{E}) permanently incorporated into each automated storage means that comprise virtual storage zones in order to facilitate management of the stock and flows of raw materials and semi-finished products.

2. The management system according to claim 1, wherein the rubber mixing facility (10) comprises several sectors in which mixing processes can be carried out, and each sector is dedicated to a distinct process with which the management system is linked, the sectors comprising:
- a sector (A) with a connecting zone (Z₂) where the raw materials that arrive at the rubber mixing facility (10) can be introduced;
- a sector (B) with a raw material storage zone;
- a sector (C) in which the rubber mixing workshop (12) is arranged with at least one processing zone (Z₃) where the slave pallets (P_{E}) can be retrieved from the raw material storage system (14);
- a sector (D) with a semi-finished product storage zone; and
- a sector (E) with a transfer zone (Z₁) where the semi-finished products can leave the rubber mixing facility (10).

3. The management system according to claim 2, further comprising, at the connecting zone (Z₂):
- at least one slave pallet dispenser (A1, A3) where the slave pallets (P_{E}) of the raw material storage system (14) can be stacked;
- an entry point (A2, A4) arranged next to the dispenser allowing a slave pallet at the dispenser to be loaded with one or more incoming raw material(s) at the entry point;
- a control device (A5) for controlling the shape of the transferred raw materials;
- an exit (A6) where the non-compliant raw materials can leave the management system;
- a revolving table (A7) for handling a raw material so that a unique raw material identification can be recognized;
- an access rail (A8) of the connecting zone (Z₂) that is aligned with the raw material storage system (14); and
- an autonomous vehicle (A9) for carrying the compliant raw materials to the dedicated spaces in the automated storage system depending on the data integrated within each unique identification.

4. The management system according to claim 2 or claim 3, further comprising, at the processing zone (Z₃):
- an exit (C1) where the ordered raw materials can leave the raw material storage system (14) after they have been retrieved, and the retrieved raw materials can be transferred to the corresponding production level of the rubber mixing workshop (12);
- a stacking station (C2) where the slave pallets (P_{E}) can be retrieved and stacked;
- an optional cleaning station (C3) where the slave pallets (P_{E}) can be cleaned;
- an entrance (C4) installed in order to accept empty dedicated pallets from a corresponding production level of the rubber mixing workshop (12); and
- a control device (C5) to ensure the compliance of the dedicated pallets with the dedicated spaces in the automated storage system.

5. The management system according to any one of claims 1 to 4, further comprising at least one robot (20) for selectively placing the raw materials in and selectively removing them from the raw material storage (14) and selectively placing the semi-finished products in and removing them from the semi-finished product storage system (16).

6. The management system according to any one of claims 2 to 5, further comprising at least one of the following elements:
- transfer lines on which corresponding conveyors can move relative to the raw material storage system (14) and the semi-finished product storage system (16); and
- a control system to identify the raw materials and to manage them depending on an optimized flow in order to create the chosen rubber compound recipe.

7. The management system according to any one of claims 1 to 6, wherein:
- the slave pallets of the raw material storage system can be loaded with one or more raw materials depending on the chosen rubber compound recipe; and
- the slave pallets of the semi-finished product storage system can be loaded with one or more semi-finished products ordered depending on the chosen rubber compound recipe.

8. The management system according to claim 7, in which:
- the raw materials comprise at least one raw material chosen from one or more carbon blacks, one or more rubber, one or more silicas, one or more chemical products and one or more sulfurs; and
- the semi-finished products comprise at least one material chosen from one or more masterbatches, one or more semi-finished materials and one or more materials to be recycled.

9. An automated flow management process carried out by the management system according to any one of claims 1 to 8 in a mixing facility that manufactures rubber compounds, the process comprising the following steps:
- the step of identifying a category for each of a plurality of raw materials to be used in the mixing facility, in which the identified category is determined from a plurality of different categories depending on the properties of a chosen rubber compound recipe;
- the step of identifying a destination in the management system to which the raw materials need to be transported for each identified category; and
- the step of generating one or more flows of raw materials between the raw material storage system (14) and the rubber mixing workshop (12), this step comprising the step of transporting the raw materials to the identified destination.

10. The process according to claim 9, further comprising the following steps:
- the step of generating one or more flows of semi-finished products between the rubber mixing workshop (12) and the semi-finished product storage system (16); and
- the step of classifying the generated flows of raw materials and the generated flows of semi-finished products by self-learning means.
